# EUROPEAN PATENT APPLICATION

(11) **EP 4 365 108 A1**
(43) Date of publication of application: **08.05.2024**
(21) Application number: 22205327.4
(22) Date of filing: 03.11.2022
(51) Int. Cl.: B65G 1/04, B65G 1/06, B65G 1/137, B65G 1/10

(54) **ORDER FULFILLMENT SYSTEM WITH A GROUND FLOOR ORDER FULFILMENT AREA AND A STORAGE SYSTEM FOR UNIT LOADS**

(71) Applicant: Dematic GmbH, 63150 Heusenstamm (DE)
(72) Inventor: YAMASHITA, Shin, 61440 Oberursel (DE)
(74) Representative: Moser Götze & Partner Patentanwälte mbB

(57) **Abstract**

Order fulfillment system (1) with a ground floor order fulfilment area and a storage system for unit loads, the storage system having a ground floor storage area (2) and an elevated storage area (3), wherein the elevated storage area is a multilevel racking (4) having aisle tracks between the racks in every level and the racks having storage channels having storage tracks in every level, the aisle tracks and storage tracks being serviced by a two-directional load carrying shuttle (9) adapted to travel on both said storage tracks and said aisle tracks for storage and retrieval of unit loads, wherein the ground floor order fulfilment area and ground floor storage area are serviced by autonomous mobile robots (AMR) (10) and/or automated guided vehicles (AGV) under the control of a control.

## Description

A traditional high rack storage facility includes a feeding or storage-entry area, via which the pallets (unit loads) are delivered and from which the racking serving units (automated storage and retrieval system, ASRS) collect the pallets for entry into storage, the so-called pre-zone. Similarly, a removal-from-storage area is required, at which after removal from storage the racking serving units deliver pallets also assigned to the pre-zone. In the case of automatic picking warehouses, picking points are typically arranged in the pre-zone. The pre-zone is also where the pallets are identified for the inventory management system or the material flow computer.

Such traditional ASRS based systems have limited flexibility to fit in a given warehouse space. In contrast usually the building is designed to follow the ASRS necessities, not the other way around. Additionally, the use of fixed infrastructure induces low flexibility on how many and where the inbound/outbound points may be located or positioned. This also means low flexibility of accessing entire SKU's (stock keeping units) from each of the input/output points. All this requires a higher ceiling height of the building than usual to justify the large investment. The use of fixed infrastructure lowers scalability in terms of storage locations and throughput. Therefore, also storage density and balance of storage density and throughput are suboptimal. In essence, absolute performance in a given space is low.

A different kind of pallet storage is known using two-dimensional pallet shuttles that transport pallets in the aisles and also within the transverse racking storage channels, see e. g. EP 3 090 966 A1 or EP 3 003 917 A1. In both cases these so-called 2D pallet shuttles have carrying frames that are lifted and lowered to carry the pallets, whereby it is possible for them to travel beneath the pallets and then lift them for transportation.

However, these 2D pallet shuttles have other issues, like high storage cost or cost per storage location as the racking is elaborate and the 2D shuttles are expensive. Additionally, it is slow and difficult to use these 2D pallet shuttle systems for order consolidation and retrieving items in a preferred sequence. These limitations are paired with limited performance in vertical movement, as the 2D pallet shuttles must interface with lifts.

Therefore, it is an objective of the invention to provide an order fulfillment system with a ground floor order fulfilment area and a storage system for unit loads that allows for high density storage while keeping flexibility and having high performance, i. e. does not have the drawbacks of either system mentioned above.

This objective is solved by the system of claim 1.

It has been recognized that an order fulfillment system with a ground floor order fulfilment area and a storage system for unit loads, with the storage system having a ground floor storage area and an elevated storage area, wherein the elevated storage area is a multilevel racking having aisle tracks between the racks in every level and the racks having storage channels having storage tracks in every level, the aisle tracks and storage tracks being serviced by a two-directional load carrying shuttle adapted to travel on both of said storage tracks and said aisle tracks for storage and retrieval of unit loads, may be advantageously combined with the ground floor order fulfilment area and ground floor storage area being serviced by autonomous mobile robots (AMR) and/or automated guided vehicles (AGV) under the control of a control, to overcome the above issues.

In other words, and according to the invention, fast mover storage and order buffering take place on the ground floor and the ground floor is served by highly flexible autonomous mobile robots (AMR) and/or automated guided vehicles (AGV). Whereas slow mover storage is located elevated above the fast mover storage and serviced by the 2D shuttles.

Using 2D shuttles helps to greatly improve the limitation associated with the traditional ASRS based systems whereas the use of AMR/AGV based storage helps to improve on the 2D shuttle drawbacks drastically.

Through the invention a significant improvement in throughput is achieved by the ground floor level due to the nature of floor storage, allowing access to unit loads in any location from all four directions. This significantly reduces the amount of shuttling and shuffling. Further the rack structure is not needed or used for ground floor based storage and accordingly uprights of the racking do not need to support unit loads loading (e. g. pallets) on the floor level reducing overall rack loading and cost.

Also, unit price of AMR/AGV is expected to be a lower than that of 2D unit load shuttles. By using the ground floor with the AMR/AGV as a slow mover buffer and sequencing area throughput of order consolidation and sequencing is improved.

By predominantly storing slow movers on the elevated storage using the two-directional load carrying shuttles vertical movements should be reduced and therefore necessity to use vertical lifts lowered and as such performance increased.

A vertical handling means will connect the elevated storage and the floor storage area. The vertical handling means may be dedicated fixed lifts and/or automated or manual forklift vehicles. These may have an interface for the respective service vehicle.

The exchange of unit loads and/or two-directional load carrying shuttles between levels is preferably performed by fixed dedicated lifts which can interface to both two-directional load carrying shuttles and autonomous mobile robots (AMR) or automated guided vehicles (AGV).

If the fixed dedicated lift is a hybrid lift configured to simultaneously transport both unit loads and/or two-directional load carrying shuttles and/or autonomous mobile robots (AMR) or automated guided vehicles (AGV) in a vertically stacked arrangement above each other using staggered side-supports on the lift platform, wherein the unit load side-support is located furthest outside and is vertically retractable in relation to the lift platform, the exchange of unit loads and vehicles can take place at the same time and also the handover of unit loads between the 2D load carrying shuttles and the AMR or AGV can take place on the lift. This raises throughput.

Optionally a direct forklift vehicle interface between the forklift vehicle and the elevated 2D shuttle operated rack levels may be used. This can be implemented as a dedicated outside faced lane accessible to the forklift vehicle.

In one embodiment an order fulfillment system according to the invention is characterized in that unit loads in the ground floor storage area are stored on fixed or mobile support frames.

By additionally including a ground floor buffer area and/or ground floor goods intake and/or ground floor shipping area, each of which are material flow wise connected and serviced by autonomous mobile robots (AMR) and/or automated guided vehicles (AGV), the integration and use of AMR/AGV throughout the complete order fulfilment system can be achieved. Then the control may be operable to control use of the same autonomous mobile robot (AMR) or automated guided vehicle (AGV) for both floor storage operations and transportation from source locations to floor storage and floor storage to destinations of warehouse and serve all those operation without hand over process at entry/exit of storage system.

Preferably, the control is operable to control the ground floor buffer area to be used for buffering unit loads with slow movers and/or fast movers until all unit loads for fulfilment of an order are available and these can be transported to the ground floor shipping, processing or picking area.

The control may be operable to control the ground floor storage area to be used for buffering purpose to source all unit loads for order fulfillment to the ground floor order processing and fulfilment area and/or to be used for intermediate storage of picked unit loads from the ground floor order fulfilment area.

The term unit load refers to the size of an assemblage into which a number of individual items are combined for ease of storage and handling, for example a pallet load represents a unit load which can be moved easily with a pallet jack or forklift truck, or a container load represents a unit for shipping purposes. A unit load can be packed tightly into a warehouse rack, intermodal container, truck or boxcars, yet can be easily broken apart at a distribution point, usually a distribution center, wholesaler, or retail store for sale to consumers or for use. Therefore, unit loads in the present sense are especially pallets, roll cages and mobile shelves.

The use of an autonomous mobile robot (AMR) and/or an automated guided vehicle (AGV) allows for flexible use of available space and change of routing when needed in contrast to structured technology (fixed infrastructure).

Automated guided vehicles (AGV) are defined as mobile self-driving transportation platforms that usually follow given routes e. g. along marked long lines or wires on the floor, or uses radio waves, vision cameras, magnets, or lasers for navigation and transport objects, usually - but not limited to - in the form of pallet loads. They have the ability to automatically move and pick objects in manufacturing facilities and distribution centers, warehouses based on predefined routes etc.

An autonomous mobile robot (AMR) is similar to an AGV. An AMR is usually more sophisticated than an AGV and is able to navigate dynamically as well as plan its own path. It is usually equipped with on board devices to understand & react to the operating environment. This gives it a high flexibility in multiple order fulfillment use applications. They both transport items to and from a location.

It is preferred that finished load carriers are automatically discharged by means of said AMR and/or AGV from manual packing station in said supply level. In other words, the AMR and /or AGV are used not only for supply of objects to the station but also for discharge of finished load carriers and then possibly the transportation to a shipping area. It is also possible to use the AMR and /or AGV for supply of empty load carriers too.

In a preferred embodiment objects according to the spatial arrangement are supplied in a supply level from a pre-picking facility such as a pallet warehouse in a grouped manner, especially on pallets, by means of AMR and/or AGV. This allows for simplifying and optimizing the picking process at the workstation. This also allows (together with the computer aided spatial arrangement) for strict sequencing of objects (donors).

AMR/AGV is used for both floor storage operations including buffering and consolidation of products and warehouse transportation from source locations to destinations of warehouse. The same AMR/AGV can be used to serve all those purposes without hand over process at entry/exit of storage system to achieve more efficient, fast and scalable operations and deal with fluctuations of every operational demands.

The order fulfilment system may function as follows:
In the elevated storage area, unit loads (e. g. pallets) of incoming products (slow movers) are stored in high-density racks serviced by the 2D load carrying shuttles. These are used to transport the unit loads horizontally and to a lift for vertical movement. The number of shuttles can be adjusted to accommodate changes in the required throughput and product mix that influence frequency of product shuffling. Fast movers are directly stored on the ground floor in the storage area on mobile support beneath the elevated storage area.

Upon receiving an (outbound) order for order fulfilment, the items (located within the unit loads, e. g. pallets) of the order are sent to a buffer area under the control of a warehouse management system (WMS) (control). The items are transported by the AMR or AGV, which streamlines the ordering of the source unit loads (pallets) and speeds up the picking process.

At a case picking workstation in the ground floor order fulfilment area, an operator picks the case from the donor unit load and stacks it on the order carrier (e. g. target pallet) based on a pre-calculated stacking pattern provided by the WMS. An interface at the picking workstation provides the operator with important information, including quantity, and a laser pointer specifies the placement position of the case on the order carrier. When a further workstation needs a same donor unit load, an AMR/AGV moves it to the next station and a new unit load may be brought to the previous picking workstation to continue picking with a new item.

In an exit and truck loading or shipping area autonomous forklifts load order carriers (target pallets) onto trucks for dispatch in an optimally stacked manner to maximize truck space.

The order fulfilment system may be operated according to an operational strategy referred to as "airport departure" strategy which is described in the following. In accordance with this operating principle, only unit loads that contain relevant source units or are full source units are transferred to a selected fulfilment area by means of the AMR/AGV. Source or product unit loads are units that include items that are selected to fulfil a particular order. The specific location within the fulfilment area is selected based upon minimization of the movement of the AMR/AGV and order utilization and distribution at the picking workstations. In other words, for the purpose of picking and/or consolidation, the AMR/AGV selected is the one which permits minimization of the movement of the product unit loads for order processing and the order can be completed at one individual fulfilment area or a single picking workstation station at which the order carriers that are order unit loads are completed with all of the items of an order from the corresponding product unit loads. The order unit loads can be transferred either from the picking workstation back into the storage or buffer area for temporary storage therein and consolidation, or can be transferred to shipping area.

While the elevated storage serviced by the 2D load carrying shuttles has a high density, it has a large deviation of how fast a respective unit load can be retrieved and provided for order fulfilment. Retrieval lead time depends largely on how many unit loads must be moved out of the way to allow access to the needed unit load and how many 2D load carrying shuttles are available to perform such work. By use of the ground level AMR/AGV this can be solved by buffering the needed unit loads in a buffer area on the ground floor level and then transporting them to the picking/order/processing/dispatch area as group once all the unit load required for particular orders are present on the ground level buffer area. This makes all needed items available at the same time at a needed location. For example, a picking workstation, where picking can then be performed without delay waiting for items on unit loads from the elevated storage serviced by the 2D load carrying shuttles.

Further details of the invention will now be explained with reference to the figures, in which:
Figure 1 schematically shows a birds view of a ground floor storage level of an order fulfillment system according to the invention;
Figure 2 schematically shows a birds view of an elevated storage area level of the order fulfillment system of figure 1;
Figure 3 schematically shows a side view of the order fulfillment system of figure 1;
Figure 4 schematically shows a perspective view of a 2D pallet shuttle used in the elevated storage area levels of the order fulfillment system of figure 1;
Figure 5 schematically shows a view of an AMR used on the ground floor level of the order fulfillment system of figure 1 without loads (A) and with mobile stand (B) or fixed stand (C) and
Figure 6 schematically shows a multifunctional lift.

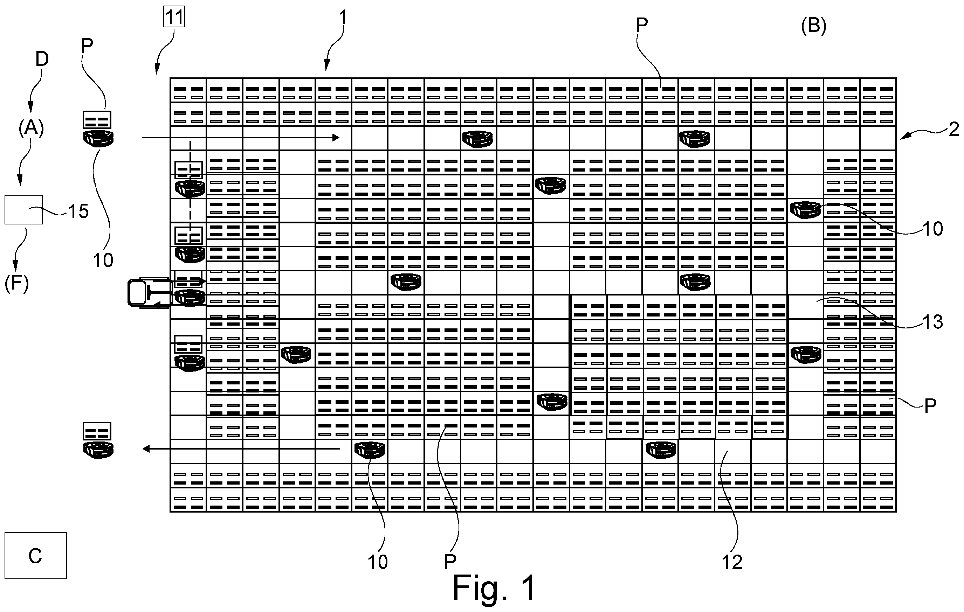

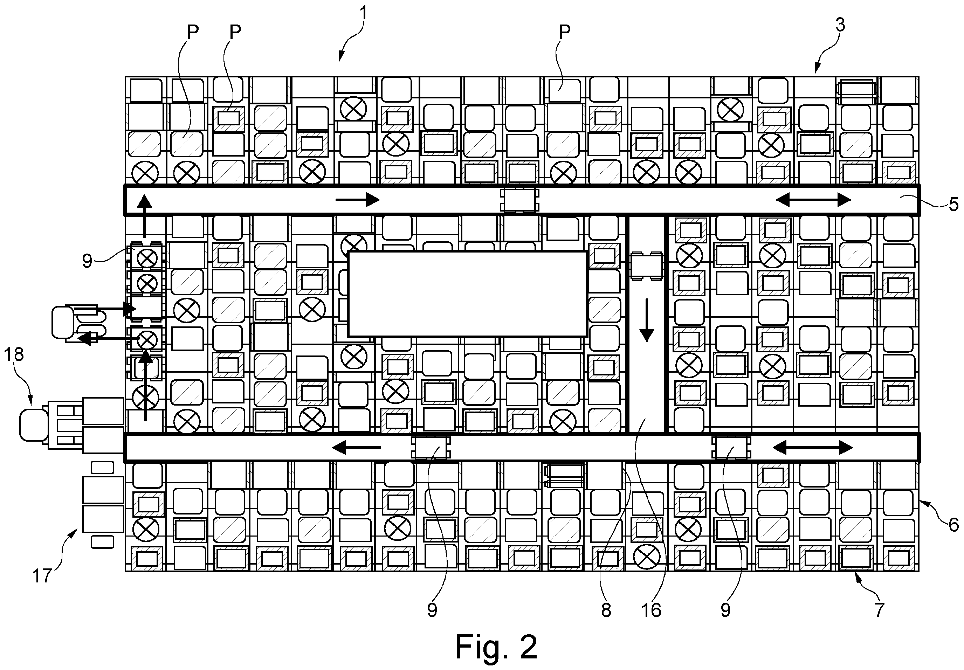

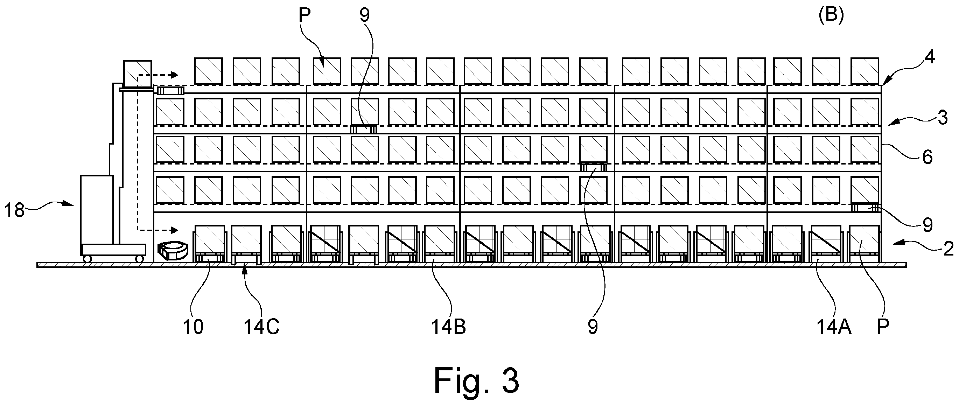

Figures 1 - 3 depict an order fulfillment system 1 with a ground floor order fulfilment area A and storage area B with a storage system for unit loads, namely pallets P.

The storage area B of the order fulfillment system 1 includes a ground floor storage area 2 and an elevated storage area 3.

The elevated storage area 3 is a multilevel racking 4 having aisle tracks 5 between the racks 6 in every level and the racks 6 having storage channels 7 having storage tracks 8 in every level.

The aisle tracks 5 and storage tracks 8 are serviced by a two-directional load carrying shuttle 9 adapted to travel on both said storage tracks 8 and said aisle tracks 5 for storage and retrieval of the pallets P. The 2D shuttles 9 travel along the tracks and can change direction by switching drive wheels and transport pallets P by engaging these from below and lifting them off the support structure of the racks 6. The support structure of the racks 6 and the corresponding storage tracks 8 are such that the 2D shuttles 9 may travel beneath the pallets P. The aisle tracks 5 may be connected by cross-aisle tracks 16.

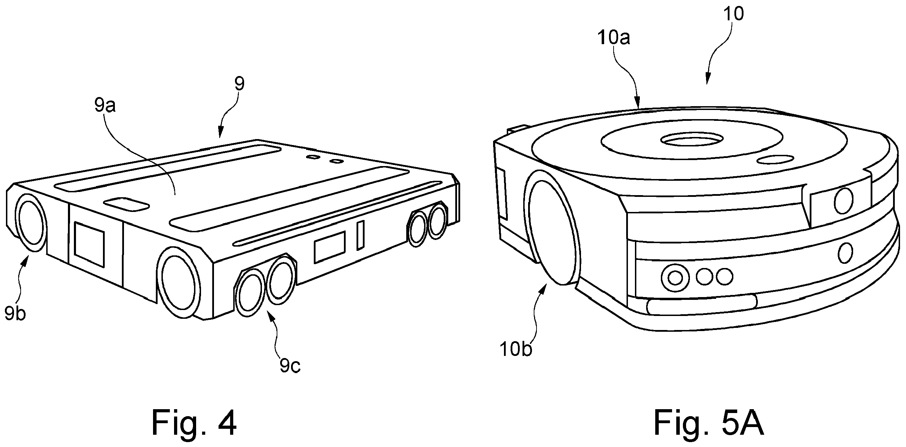

The two-directional load carrying shuttle 9 will be described below in relation to figure 4.

The ground floor storage area 2 is directly below the elevated storage area 3, i. e. underneath the multilevel racking 4, in between the uprights etc.

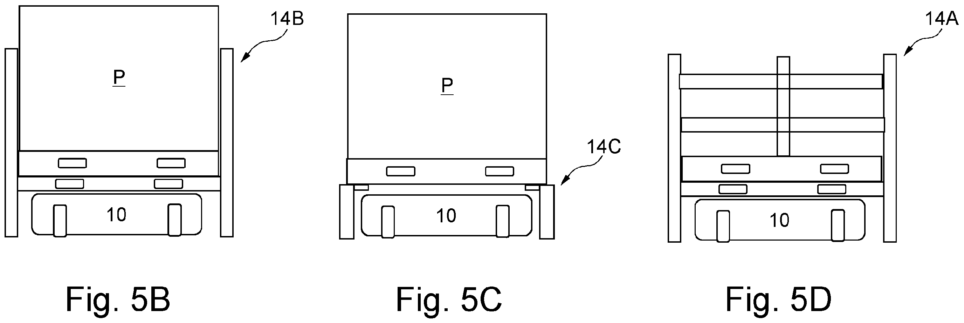

The ground floor order fulfilment area A and ground floor storage area 2 are serviced by autonomous mobile robots (AMR) 10 under the control of a control 11 that controls the whole system and its components. The AMR 10 will be described below in relation to figure 5.

The control 11 is operable and implemented to control storage of pallets P containing slow movers and reserves in the elevated storage area 3 whereas it is operable and implemented to control storage and consolidation of pallets P containing fast movers or work in progress pallets, that may require frequent retrieval, on the ground floor storage area 2.

So, the pallets containing fast mover items and order buffering takes place on ground floor storage area 2 and the ground floor storage area 2 is served by highly flexible autonomous mobile robots 10, whereas pallets containing slow mover items are located elevated above the fast movers in the ground floor storage area 2 and are serviced by the 2D shuttles 9.

The ground floor storage area 2 has aisles 12 and cross-aisles 13 connecting the aisle 12 to allow the AMR 10 to enter the storage (see exemplary arrows) and access the pallets P stored therein besides the aisles on the ground or preferably on mobile frames 14.

As shown in figures 5(B) and 5(C) and 5(D), the use of mobile shelves 14A, mobile stands 14B and fixed stand 14C allows the flat AMR 10 to navigate beneath the destination pallet P on the frame 14 and engage the mobile frame 14A by lifting and respectively access the pallet P and transport it away along the paths created by the aisles 12 and 13, for example to a goods-to-person picking station 15 in the ground floor order fulfilment area A. Alternatively, AMR 10 can handle the mobile frame 14B with or without a pallet P. In the case of fixed stands 14C the AMR 10 will only lift off the pallet P. It can also handle mobile shelve 14A for non-palletizable goods.

The exchange of pallets P and/or of two-directional load carrying shuttles 9 between levels is performed by dedicated fixed lifts 17 and/or automated or manual forklift vehicles 18.

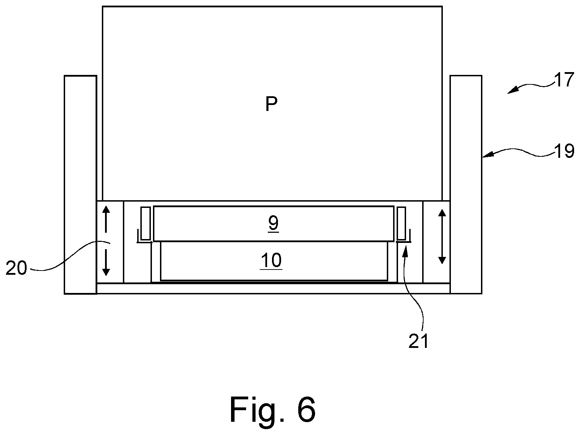

The 2D shuttles 9 can drop off to or take up pallets P from the lifts 17. It is also possible to have the 2D shuttles 9 and/or the AMR 10 enter into the lifts empty or carrying the pallets P and change levels, as is indicated in figure 6.

Figure 6 shows a carriage 19 of a lift 17. The carriage 19 has retractable side supports 20 for supporting a pallet P or mobile shelf 14A, below which there is space for the 2D shuttles 9 and/or the AMR 10 to enter the carriage 19. The AMR 10 will use the floor of the carriage 19 and the 2D shuttle 9 will use elevated supports rails 21, mimicking transport rails, so that a staggered arrangement is possible. Both the AMR 10 and shuttle 9 can raise and lower their support to engage the pallet P or shelf 14A.

The same is possible when using forklift vehicles 18. These may take over just the pallets P or also the 2D shuttles 9 alone or together with the loaded pallet P.

Obviously, the exchange includes the vertical transportation of pallets P to and from the ground floor 2.

On the ground floor 2 the pallets P can be transported by the AMR 10 that will interface with the dedicated fixed lifts 17 and/or automated or manual forklift vehicles 18, either directly or by means of interface stations, e. g. roller conveyors arranged at the lifts 17. When interfacing directly the AMR 10 may drive under the lift 17 or engage in a cooperative fashion with the forklift vehicles 18 for the handover of the pallets P.

Figure 4 shows a 2D shuttle 9 in general that has a load carrying surface 9a, that can be raised and lowered (as indicated above), and a first set of wheels 9b for traveling along a first rail path and a second set of perpendicularly arranged wheels 9c for travelling along a second rail path perpendicular to the first path. Such 2D shuttles 9 are for example known from WO 2014/195867 A1.

Figure 5 (a) shows an AMR 10 in general that has a load carrying surface 10a, that can be raised and lowered (as indicated above), and has a first set of wheels 10b for traveling along the floor. Such AMR 10 are for example known from WO 2006/044108 A2.

The ground floor may additionally include a ground floor buffer area C and/or ground floor goods intake D and/or ground floor shipping area F, each of which are material flow wise connected and serviced by autonomous mobile robots 10.

The control 11 is operable and implemented to control the ground floor buffer area C to be used for buffering pallets P with slow movers and/or fast movers until all pallets P for fulfilment of an order are available and these can be transported to the ground floor shipping area F for dispatch.

The control 11 is operable and implemented to control the ground floor storage area 2 to be used for buffering purpose to source all pallets P for order fulfillment to the ground floor order processing and fulfilment area A and/or to be used for intermediate storage of picked pallets P from the ground floor order fulfilment area A.

The control 11 is further operable and implemented to control use of the same autonomous mobile robot 10 for both floor storage operations and transportation from source locations to floor storage 2 and from floor storage 2 to destinations of warehouse and serve all those operations without hand over process at entry/exit of the storage system.

## Claims

1. Order fulfillment system with a ground floor order fulfilment area and a storage system for unit loads, the storage system having a ground floor storage area and an elevated storage area, wherein the elevated storage area is a multilevel racking having aisle tracks between the racks in every level and the racks having storage channels having storage tracks in every level, the aisle tracks and storage tracks being serviced by a two-directional load carrying shuttle adapted to travel on both said storage tracks and said aisle tracks for storage and retrieval of unit loads,
**characterized in that**
the ground floor order fulfilment area and ground floor storage area are serviced by autonomous mobile robots (AMR) and/or automated guided vehicles (AGV) under the control of a control.

2. Order fulfillment system according to claim 1 **characterized in that** the ground floor storage area is arranged directly underneath the elevated storage area.

3. Order fulfillment system according to claim 1 or 2 **characterized in that** the control is operable to control storage of unit loads containing slow movers and reserves in elevated storage area whereas it is operable to control storage and consolidation of unit loads containing fast movers or work in progress order carriers, that may require frequent retrieval, on the ground floor storage area.

4. Order fulfillment system according to any preceding claim **characterized in that** exchange of unit loads and/or two-directional load carrying shuttles between levels is performed by dedicated fixed lifts and/or automated or manual forklift vehicles.

5. Order fulfillment system according to any preceding claim **characterized in that** exchange of unit loads and/or two-directional load carrying shuttles between levels is performed by fixed dedicated lifts which can interface to both two-directional load carrying shuttles and autonomous mobile robots (AMR) or automated guided vehicles (AGV).

6. Order fulfillment system according to claim 4 or 5 **characterized in that** the fixed dedicated lift is a hybrid lift configured to simultaneously transport both unit loads and/or two-directional load carrying shuttles and/or autonomous mobile robots (AMR) or automated guided vehicles (AGV) in a vertically stacked arrangement above each other using staggered side-supports on the lift platform, wherein the unit load side-support is located furthest outside and is vertically retractable in relation to the lift platform.

7. Order fulfillment system according to any preceding claim **characterized in that** unit loads in the ground floor storage area are stored on fixed or mobile support frames.

8. Order fulfillment system according to any preceding claim additionally including a ground floor buffer area and/or ground floor goods intake and/or ground floor shipping area, each of which are material flow wise connected and serviced by autonomous mobile robots (AMR) and/or automated guided vehicles (AGV).

9. Order fulfillment system according to claim 8 **characterized in that** the control is operable to control the ground floor buffer area to be used for buffering unit loads with slow movers and/or fast movers until all unit loads for fulfilment of an order are available and these can be transported to the ground floor shipping, processing or picking area.

10. Order fulfillment system according to claim 8 or 9 **characterized in that** the control is operable to control the ground floor storage area to be used for buffering purpose to source all unit loads for order fulfillment to the ground floor order processing and fulfilment area and/or to be used for intermediate storage of picked unit loads from the ground floor order fulfilment area.

11. Order fulfillment system according to any preceding claim 3 to 10 **characterized in that** the control is operable to control use of the same autonomous mobile robot (AMR) or automated guided vehicle (AGV) for both floor storage operations and transportation from source locations to floor storage and from floor storage to destinations of warehouse and serve all those operations without hand over process at entry/exit of storage system.

12. Order fulfillment system according to any preceding claim **characterized in that** the unit loads are pallets and/or roll cages and/or mobile shelves.
